# EUROPEAN PATENT APPLICATION

(11) **EP 2 634 682 A2**
(43) Date of publication of application: **04.09.2013**
(21) Application number: 12197783.9
(22) Date of filing: 18.12.2012
(51) Int. Cl.: G06F 3/0482, G06F 3/0486, G06F 3/0481

(54) **Apparatus and method for creating a shortcut menu**

(30) Priority: 22.02.2012 KR 20120018141
(71) Applicant: Pantech Co., Ltd., Seoul 121-792 (KR)
(72) Inventor: Lee, Jung-Woon, 121-792 Seoul (KR); Kong, Kyoung-Jin, 121-792 Seoul (KR); Hwang, Ju-Hee, 121-792 Seoul (KR)
(74) Representative: Jordan, Volker Otto Wilhelm

(57) **Abstract**

A method for generating a combined function includes selecting a first application including a first function, determining whether a second application includes a second function compatible to be combined with the first function, and combining the first function and the second function to generate the combined function. A terminal includes a user interface to receive a selection of a first application including a first function, an information acquiring unit to determine whether a second application includes a second function compatible to be combined with the first function, and a shortcut menu creating apparatus to combine the first function and the second function to generate a combined function.

## Description

### CROSS-REFERENCE TO RELATED APPLICATION

This application claims the benefit under 35 U.S.C. §119(a) of Korean Patent Application No. 10-2012-0018141, filed on February 22, 2012, the entire disclosure of which is incorporated herein by reference for all purposes.

### BACKGROUND

FIELD

The following description relates to an apparatus and method for creating a shortcut menu in a mobile terminal.

DISCUSSION OF THE BACKGROUND

With development of information communication technology, electronic devices are being diversified more and more. Diversification in types of electronic devices may be more significant in mobile electronic devices, such as a mobile terminal, than in fixed electronic devices. For example, cellular phones, Motion Picture Experts Group Audio Layer III (MP3) players, digital cameras, Portable Multimedia Player (PMP), navigation, mobile games, electronic dictionaries, electronic book readers, Digital Multimedia Broadcasting (DMB) receivers, and the like have been popularized and widely used. Further, due, at least in part, to the wide use of tablet computers, such as a smart phone and a smart pad, their related industries are rapidly being expanded.

A mobile terminal, such as a smart phone, a tablet computer, or the like, may providea user interface, which may include a touch screen. The mobile terminal may use an Operating System (OS), such as Android® of Google Inc., i-OS® of Apple Inc., and Window Mobile® of Microsoft Inc. Mobile terminals having such OS may show different icons of applications though a user interface and may execute different operations of the applications with respect to the OS installed in the mobile terminal. However, regardless of the OS that may be installed in the mobile terminal, an application installed in mobile terminals may be displayed on a user interface as an icon that may be selected or clicked on to execute the corresponding application. For example, when a user touches or presses the icon corresponding to an application,a corresponding operation may be executed, such as execution of the respective application.

Applications installed in a mobile terminal may be classified into preload applications and download applications. The preload applications may be installed and provided by a manufacturer or a vendor upon manufacturing the mobile terminal. The download applications may be downloaded from a web-based application stores or markets, such as an App Store®, and installed in the mobile terminal. The applications may also be downloaded from an external terminal, a server, a network, and the like.

An application installed in a mobile terminal may be executed by performing input manipulation, such asproviding a touch input on a touch screen or pressing an icon displayed on a home screen or a menu screen of the touch screen. If the application has a plurality of functions corresponding to a main operation menu that may be displayed in a sub-menu, the user may need to further perform additional input manipulation to perform an intended operation. For example, a call operation menu may include a voice call function and a video call function, and an environment setting operation menu may include a network setting function, a display setting function, and a sound setting function. Accordingly, if a function which a user wants to use is included in a sub-menu of a specific application, the number of the touch input manipulations performed on the touch screen may be two or more. More specifically, the sub-menu may be accessed by selecting one of the operation menu items included in the main menu screen of the application. The sub-menumay include a list of operations or functions that may be performed or another level of sub-menus. More particularly, when a user seeksto use an operation included in a sub-menu of a specific application on a frequent basis, the user may be required to perform two or more input manipulations whenever the user seeks to execute the respective operation included in the sub-menu.

In order to remove such inconvenience, a home screen may provide a bookmark function to allow a user to directly connect to a menu of an application that the user may often use. For example, a mobile terminal may provide a function of displaying target applications that may often be used on a home screen to allow a user to connect to the target applications more easily. However, the bookmark function is no more than moving icons that have been displayed on a menu screen to a home screen. Accordingly, the bookmark function may be unable to reduce the number of input manipulations that may be performed when the userseeks to execute a function included in a sub-menu of a specific application.

### SUMMARY

Exemplary embodiments of the present invention provide an apparatus and method for creating a shortcut menu in a mobile terminal.

Additional features of the invention will be set forth in the description which follows, and in part will be apparent from the description, or may be learned by practice of the invention.

Exemplary embodiments of the present invention provide a method for generating a combined function including selecting a first application including a first function; determining whether a second application includes a second function compatible to be combined with the first function; and combining the first function and the second function to generate the combined function.

Exemplary embodiments of the present invention provide aterminal including a user interface to receive a selection of a first application including a first function; an information acquiring unit to determine whether a second application includes a second function compatible to be combined with the first function; and a shortcut menu creating apparatus to combine the first function and the second function to generate a combined function.

Exemplary embodiments of the present invention provide a method for generating a combined function including selecting a first icon corresponding to a first application displayed on a touch screen; displaying applications that are capable of combining with the first application to be distinguishable from the other applications displayed on the touch screen; selecting a second icon corresponding to a second application among the applications that are capable of combining with the first application; generating the combined function by combining a function of the first application and a function of the second application; and displaying a third icon corresponding to the combined function in a shortcut menu.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWING

The accompanying drawings, which are included to provide a further understanding of the invention and are incorporated in and constitute a part of this specification, illustrate exemplary embodiments of the invention, and together with the description serve to explain the principles of the invention.

FIG. 1 is a diagram illustrating a configuration of a user terminal according to an exemplary embodiment of the present invention.

FIG. 2 is a diagram illustrating a shortcut menu creating apparatus according to an exemplary embodiment of the present invention.

FIG. 3 shows a matching table representing a correspondence relationship between commands and intent filters according to an exemplary embodiment of the present invention.

FIG. 4 is a flowchart illustrating a process for acquiring function information of an application according to an exemplary embodiment of the present invention.

FIG. 5 is a flowchart illustrating a process foracquiring function filter information of an application according to an exemplary embodiment of the present invention.

FIG. 6 is a flowchart illustrating a shortcut menu creating method according to an exemplary embodiment of the present invention.

FIG. 7A, FIG. 7B, FIG. 7C, FIG. 7D, FIG. 7E, andFIG. 7F illustrate an operation of a shortcut menu creating procedure according to the shortcut menu creating method of FIG. 6.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. Although some features may be described with respect to individual exemplary embodiments, aspects need not be limited thereto such that features from one or more exemplary embodiments may be combinable with other features from one or more exemplary embodiments.

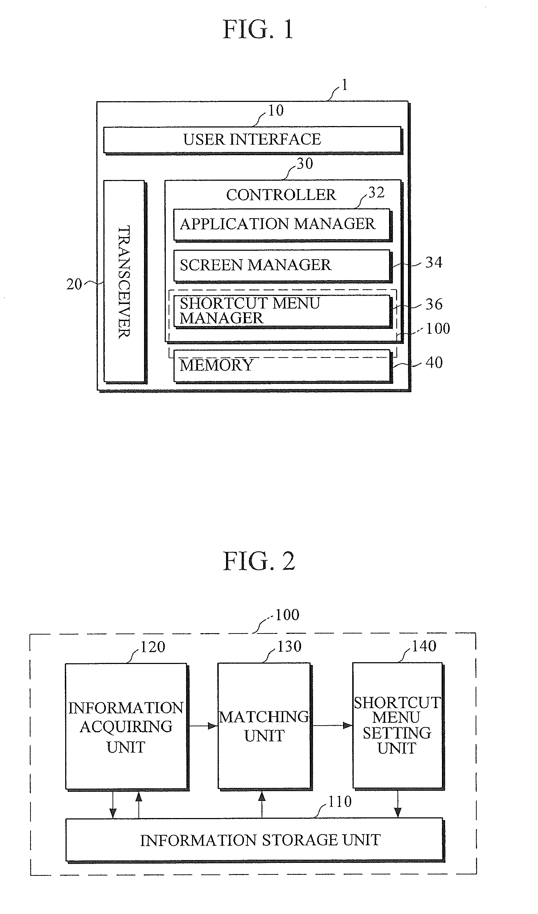

FIG. 1 is a diagram illustrating a configuration of a user terminal 1 according to an exemplary embodiment of the present invention.

Referring to FIG. 1, the user terminal 1 includes a user interface 10, a transceiver 20, a controller 30, and a memory 40. A reference number 100 denoted in FIG. 1 indicates a shortcut menu creating apparatus of the user terminal 1. The shortcut menu creating apparatus 100 may include features of the controller 30 and features of the memory 40. Further details related to a configuration and operation of the shortcut menu creating apparatus 100 will be described later.

The configuration of the user terminal 1 shown in FIG. 1 may schematically show some, but not all,components that may be used. More specifically, the user terminal 1 may further include additional components that may be used to executevarious operations of the user terminal 1. Also, the user terminal 1 may include different components based on its type or operation.

The user interface 10 may be an input/output unit to provide interaction between a user and the user terminal 1. The user may input a command or data to the user terminal 1 through the user interface 10, and the user terminal 1 may output information or data to the user through the user interface 10. The user interface 10 may include, without limitation, a sound input/output unit, such as a microphone or a speaker, and a touch screen to receive a touch input and to output display information, such as a graphic image, text, and the like. The touch screen may include a structure where a touch pad as an input unit may be combined with a display as an output unit, or an integrated structure of an input unit and an output unit.

The transceiver 20 is a device through which the user terminal 1 may receive or transmit data from and/or to external devices, such as other user terminals or servers, via a network. For example, the user terminal 1 may connect to an application market through the transceiver 20 to download a new application. The type of a network to which the transceiver 20 can connect to may not be limited, and may include a mobile communication network, a Local Area Network (LAN), or a wireless fidelity (WiFi) network.

The controller 30 may perform management operations of the user terminal 1. For example, the controller 30 may perform one or moreoperations associated with an executionof an application or data file (e.g., game execution, multimedia play, and the like) in the user terminal 1. Further, the controller 30 may perform one or more operations associated with network communications, such as data communication, a voice call, a video call, and the like, between the user terminal 1 and external devices. Also, the controller 30 may processes data or signals received through the user interface 10, store the received data in the memory 40, and output predetermined data or signals through the user interface 10.

Also, the controller 30 may acquire information used in creating a shortcut menu, process related signals, and perform management operations. Referring again to FIG. 1, the controller 30 includes an application manager 32, a screen manager 34, and a shortcut menu manager 36. The application manager 32 may acquire and manage information associated with preloaded applications and download applications that may be installed in the user terminal 1. The screen manager 34 may acquire and manage information associated with icons or menus that are displayed on a home screen or a menu screen. Also, the shortcut menu manager 36 may acquire and manage information used to create a new shortcut menu or iconcorresponding to a combined function. The combined function may be created or generated when two or more functions are combined. Further, the shortcut menu manager may acquire and manage information associated with a shortcut menu(s) installed in the home screen or menu screen and managing the information. More details about the function and operation of the controller 30 will be described with reference to FIG. 2 below.

The memory 40 may store data in the user terminal 1. The memory 40 may store at least one of an operating system(OS)used to operate the user terminal 1, a preload application program, a download application program, a text, an image, video data, and the like. In addition, the memory 40 may store information related to applications installed in the user terminal 1, such asan application name, an executable function, a function supported by one or more applications, and the like.

FIG. 2 is a diagram illustrating a shortcut menu creating apparatus 100. The components of the shortcut menu creating apparatus 100 shown in FIG. 2 may be illustrated according to their functions and two or more of the components may be physically incorporated or separated.

Referring to FIG. 2, the shortcut menu creating apparatus 100 includes an information storage unit 110, an information acquiring unit 120, a matching unit 140, and a shortcut menu setting unit 140. The information storage unit 110 may be an independent unit, or integrated with the memory 40 and/or the information acquiring unit 120 . The matching unit 140 and the shortcut menu setting unit 140 may correspond to a function of the shortcut menu manager 36 included in the controller 30 shown in FIG. 1.

The shortcut menu creating apparatus 100 may create a shortcut menu including a combined function. The combined function may be generated by combining functions of two or more applications displayed on a specific screen (e.g., a home screen or a menu screen) of the user terminal 1 (see FIG. 1). Here, the combined function maybesupported by at least the applications that provided a function included in the combined function, since the combined function includes a combination of functionsthat were provided by the applications supporting the respective functions. The combined function may refer to a function that was unable to be displayed as an icon on the home screen or menu screen of the user terminal 1 without performing a combination operation in a user terminal according to a related art. In more detail, the combined function may be a function that may be provided in a submenu by one or both of two applications that provide the functions included in the combined function. For example, if a photography function provided by a camera application is combined with a call function provided by a call application, an icon for executing a video call, which may correspond to a combined video call function provided ina sub-menu of the call application, may be displayed on a home screen or a menu screen. Accordingly, the video call function may be a combined function. However, aspects of the invention are not limited thereto, such that the combined function may be included in a sub-menu of an application that did not provide a function included in the combined function.

The information storage unit 110 may store function information and function filter information about one or more applications installed in the user terminal 1. The installed applications may include at least one of a preload application type and a download application type. Further, function information and function filter information associated with the preloaded applications may be stored in a first database, and function information and function filter information associated with the downloaded applications may be stored separately in a second database of the information storage unit 110. Further, function information and filter information associated with the preloaded application and the downloaded application may be stored in a single database of the information storage unit 110. The function information and function filter information may also be combined and stored in the information storage unit 110 or stored separately in different databases of the information storage unit 110. The function information may be associated with the selected application, but is not limited thereto. The function filter information may be associated with the non-selected applications that may include a function that may be compatible to be combined with a function of the selected application, but is not limited thereto.

The function information may be a function or a list of functions that may be used when executing the corresponding application. For example, the function information may include a photography function of a camera application, a call function of a call application, an edit function of a setting application, and the like. The function information may be stored in the information storage unit 110 in association with the corresponding application.

A database storing the function information and/or the function filter information may be allocated a predetermined name according to OS. For example, if Android® OS is used, the function information associated with the preloaded application may be stored in a command database or a first database, and a category database or a second databasemay store the function information corresponding to downloaded application. Here, the terms of "command database" and "category database" may be provided arbitrarily and other terms may be used to refer to the corresponding databases. The command database, which may store one or more functions of the preloaded applications, which may have been installed in by a terminal manufacturer when the user terminal 1 was manufactured. Also, the category database may store one or more functions of the downloaded applications, which may be downloaded by a user or by the user terminal 1. Further, category information of one or more downloaded applications may be provided from a market or a source providing the downloaded application when the respective application is downloaded. For example, a list of commands associated with the download applications may be defined in advance based on categories of the downloaded applications. Commands corresponding to applications of a specific category may be configured or determined based on functions of applications having common characteristics with respect to the specific category. The category of an application may be classified by the market or source providing the downloaded application. Each of the command database and category database may store a PackageNamefield, which may indicate an application name in correspondence to a CommandListfield, which may indicate functions executable by the application. However, aspects of the invention are not limited thereto, such that the category of an application may be classified by the user or a user terminal.

For example, when an application requests the Android® OS to execute a specific command, the application may send an intent message, which may be an asynchronous message mechanism in the Android@ OS. The Android® OS may execute the corresponding operation or service in response to the intent message. The corresponding operation may refer to a component, which may perform a task of a visual user interface, and the corresponding service may refer to a component, which may operate as a background without using any visual user interface.

The function filter information may be a list of functions that the corresponding application can receive and process, or a list of functions that may be executedin a sub-menu of the corresponding application. For example, if a call application can receive and process a photography function, and a YouTube® application can receive and process a photography function, it may be determined that the photography function may be received and processed by the call application or the YouTube® application. Further, if a clock application can receive and process a location identification function, it may be determined that the function filter information for the clock application is set, such that the location identification function may be received and processed by the clock application. The function filter information may be stored in the information storage unit 110 in correspondence to PackageNamefield, which may refer to a name of the corresponding application. Further, the function filter information may refer to a function or a list of functions that the corresponding application cannot receive and process.

For example, the function filter information may be stored in a database. If Android® OS is used, the function filter information may be stored as intent filter information in an intent filter database. However, aspects of the invention are not limited thereto, such that the filter information may be stored in a different database. The intent filter information may be contained in a manifest file (e.g., Androidmanifest.xml) that may define an intent filter. The manifest file may be included in some or all Android® applications. Accordingly, the intent filter information may be created with reference to the manifest file of one or more applications. In the intent filter database, one or more PackageNamefields indicating an application name may be stored in correspondence to IntentFilterList.

According to aspects of the invention, function information having information about a function that a specific application can execute, and function filter information that may provide the list of functions the application can receive and process may be similar or the same in specific OS. In the example of Android® OS described above, function information and function filter information may be different from each other since the function information may refer to command information, and the function filter information may refer to intent filter information. In an example, if a command is the same or provides the same information as an intent filter, both the function information and the function filter information may be determined to be command information.

The informant storage unit 110 may store matching list information that may provideinformation associated with a matching relationship between function information and function filter information. The matching list information may include information that indicate the correspondence relationship or matching relationship between function information and function filter information. The matching list information may include information about a function included in a shortcut menu for executing a combined function. The combined function may be created by combining a first function with a second function associated with a function filter that has a correspondence relationship with the first function. The information associated with the shortcut menu may include, without limitation,at least one of a name of the shortcut menu, function filter information of the shortcut menu, function information of the shortcut menu, and the like. Also, the information storage unit 110 may include, without limitation, at least one of icon information of the shortcut menu, function information of the shortcut menu, and the like.

In an example, if Android® OS is used, the matching list information may include a matching table providing a correspondence relationship between commands and intent filters. The matching table may represent a correspondence relationship between a command list and an intent filter list. Also, the matching table may include the names of shortcut menus, such as CreatePackageName, created by combining the commands with the intent filters, respectively, and shortcut menu intent filter information, such asCreateIntentFilterName, that may be used to execute the new applications, respectively.

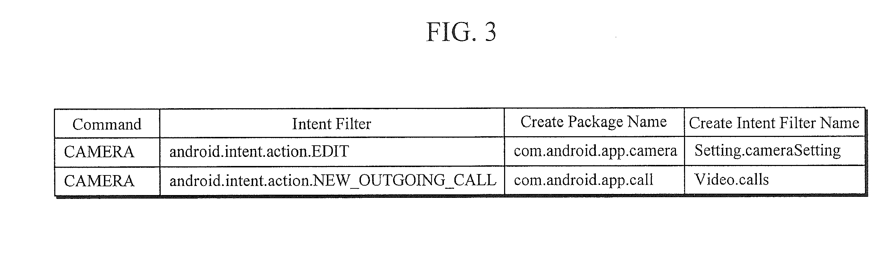

FIG. 3 shows a matching table representing a correspondence relationship between commands and intent filters according to an exemplary embodiment of the present invention.

The matching table shown in FIG. 3 may illustrate a command field having a CAMERA command and an intent filter field having an EDIT filter and a NEW_OUTGOING_CALL filter. Referring to FIG. 3, the matching table may provide a relationship between the CAMERA command list and intent filters, includingan android.intent.action.EDIT filter and an android.intent.action.NEW_OUTGOING_CALL filter. Also, the matching table includes the names of shortcut menus including a com.android.app.camera and a com.android.app.call to executeone or more combined functions. The combined functionsmay be created by combining a function of the command with other functions associated with the intent filters, and shortcut menu intent filters, includingSetting.cameraSetting and Video.calls.

The information acquiring unit 120 may acquire function information of an application selected by a user, and function filter information of other applications displayed on the same screen as the selected application, from the information storage unit 110. Further, the information acquiring unit 120 may acquire function filter information of an application selected by a user, and function information of other applications displayed on the same screen as the selected application, from the information storage unit 110. More specifically, since the correspondence relationship between function information and function filter information may be used, the information acquiring unit 120 can acquire function information or function filter information of a target application. The following description will be given based on acquiring function information of a target application. However, the case of acquiring function filter information of a target application also may be implemented in a similar manner.

In more detail, if a user, using the shortcut menu creating apparatus 100, selects one from among a plurality of icons displayed on a home screen or a menu screen to create a shortcut menu, the information acquiring unit 120 may acquire function information or function filter information of an application corresponding to the selected icon from the information storage unit 110. The information acquiring unit 120 may also acquire function filter information or function information of applications corresponding to the other icons (i.e., icons not selected by the user although they are displayed on the same screen as the selected icon) displayed on the home screen or menu screen, from the information storage unit 110.

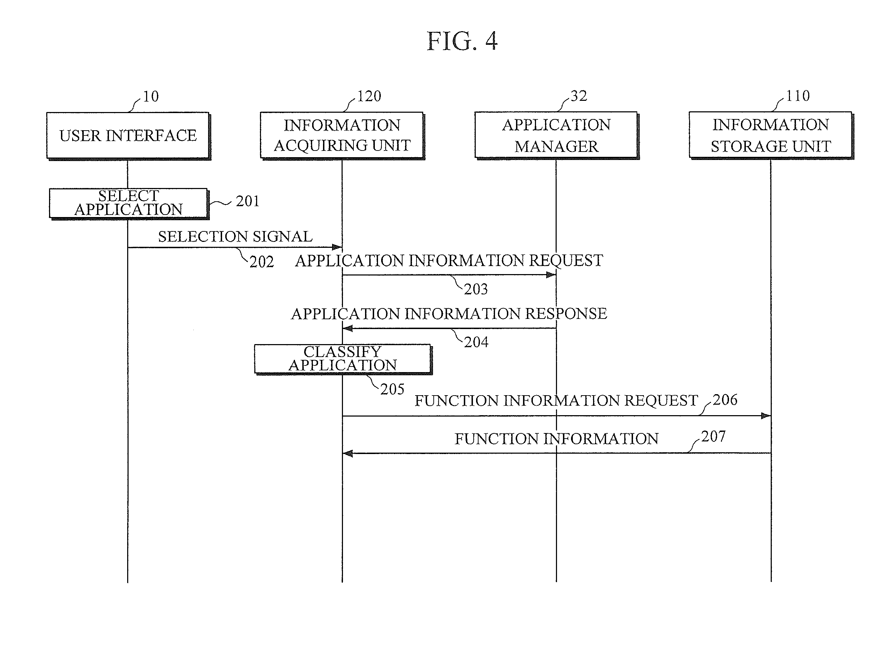

FIG. 4 is a flowchart illustrating a process for acquiring function information of an application according to an exemplary embodiment of the present invention. Although the process of FIG. 4 below will be described with a reference to the user terminal 1 of FIG. 1, it is not limited thereto.

Hereinafter, a process in which the information acquiring unit 120 acquires function information of an application will be described with reference to FIG. 1, FIG. 2, and FIG. 4. Further, although the process of FIG. 4 will be described as being performed by the user terminal 1 with respect to an Android® OS, the process of FIG. 4 is not limited thereto. For example,a different OS, such as i-OS® or Window Mobile® OSmay be used.

Referring to FIG. 4, in operation 201, a user selects an application icon among a plurality of application icons displayed on a home screen or a menu screen of a user interface 10, for example, a touch screen. In operation 202, if it is determined that the selected icon corresponds to an input for creating a shortcut menu, a selection signal from the user interface 10 is transferred to the information acquiring unit 120. A method for determining whether a user's selection of a specific icon corresponds to an input associated with creating a shortcut menu or an input having a different operation (e.g., execution operation of the corresponding application) is not limited. For example, execution of a specific operation may be determined based on whether the user touches a specific icon longer than a predetermined time period (e.g., one second). As another example, if an application that may be used to create a shortcut menu is provided, the user may execute the application and then select an application icon among a plurality of application icons displayed on a screen.

In operation 203, after receiving the selection signal, the information acquiring unit 120 may transfer an application information request signal for requesting information about the application selected in operation 201, to the application manager 32. If Android® OS is used, the application manager 32 may be a PackageManager, and the PackageManager may acquire and manage various information from installed applications. In operation 204, the application manager 32 transfers an application information response to the information acquiring unit 120 in response to the application information request signal. In operation 205, the information acquiring unit 120 determines whether the application selected in operation 201 is a preload application or a download application based on the application information response.

The operation 203, the operation 204, and the operation 205 may be aimed at determining whether the application selected in operation 201 is a preload application or a download application, and accessing a database storing information associated with a function of the corresponding application according to the result of the determination to acquire the function information of the selected application. The information associated with the function of the preload application and the download applications may be stored in different databases. If information associated with the function of preload applications and download applications is stored in the same database, the operation 203, operation 204, and operation 205 may be omitted.

In operation 206, the information acquiring unit 120 transfers a function information request signal to the information storage unit 110. The function information request signal may refer to a signal to request function information of the application whose application information (e.g., a name and type of the application) has been acquired in operation 204. If a type of the selected application has been classified through the operation 203, the operation 204, and the operation 205, the information acquiring unit 120 may transmit the function information request signal to a database of the information storage unit 110. More specifically, the information acquiring unit 120 may transmit the function information request signal either to a database storing function information of the preload application type or to a database storing function information of the download application. Also, in operation 207, the information storage unit 110 that has received the function information request signal transmits a response signal including the function information of the corresponding application to the information acquiring unit 120.

If a user touches and holds a specific icon in Android® OS longer than a predetermined time period (e.g., one second), a long click event may be generated. When the long click event is generated, a managerthat processes the long click event may request the PackageManager to send application information. The manager may, for example, be an OnLongClickListner, which may be the manager that may correspond to a function of the information acquiring unit 120. The information acquiring unit 120 may determine whether the corresponding application is a preload application or a download application, based on the application information acquired from the PackageManager. For example, since preload applications may be installed in a system memory area of a user terminal and a flag ApplicationInfo.FLAG_SYSTEM may be set, the information acquiring unit 120 may be able to determine whether the application is a preload application or a download application based on existence or non-existence of the flag. Accordingly, the information acquiring unit 120 may acquire command list information corresponding to function information from a command database or a category database, according to the type of the application.

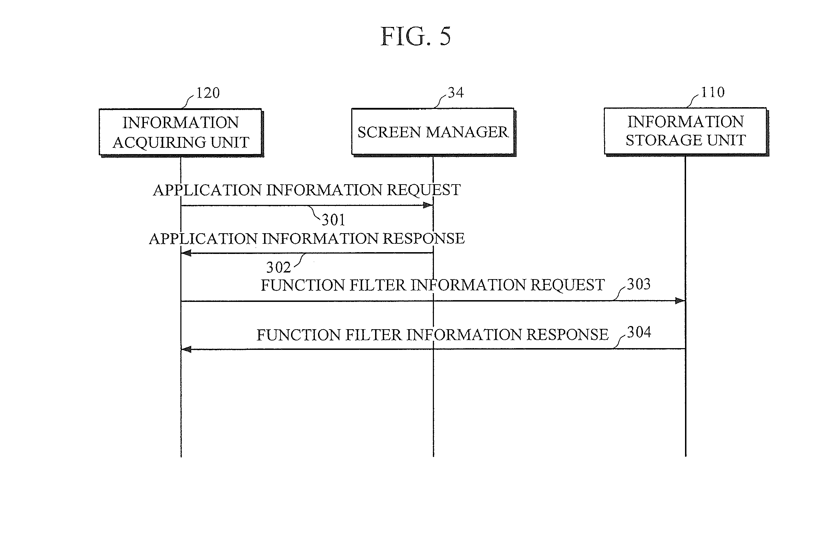

FIG. 5 is a flowchart illustrating a process for acquiring function filter information of an application according to an exemplary embodiment of the present invention.

As described above, the information acquiring unit 120 may acquire function filter information of applications that may be displayed on a home screen or a menu screen, which may not be selected by a user, or non-selected applications. A process in which the information acquiring unit 120 may acquire function filter information when a user terminal uses Android® OS will be described with reference to FIG. 1, FIG. 2, and FIG. 5, however, the process also can be applied in the same way or in a modified way to a case where different OS is used. Further, although process of FIG. 5 is described as being performed by the user terminal 1 of FIG. 1 and an Android® OS, it is not limited thereto.

Referring to FIG. 5, in operation 301, the information acquiring unit 120 transfers an information request signal for requesting information about other applications appearing on a screen (e.g., home screen or menu screen) except for the application selected in operation 201 of FIG. 4 or non-selected applications, to the screen manager 34. In operation 302, the screen manager 34 transfers an application information response including application information to the information acquiring unit 120, in response to the application information request signal. Here, since the non-selected applications are applications displayed on the same screen (e.g., a home screen or a menu screen) as the selected application, the information acquiring unit 120 may acquire the application information through the screen manager 34.

In operation 303, the information acquiring unit 120 transmits a function filter information request signal to the information storage unit 110. The function filter information request signal may refer to a signal for requesting function filter information of applications whose application information has been acquired in operation 302. In operation 304, the information storage unit 110 receiving the function filter information request signal transmits a response signal including function filter information of the individual applications to the information acquiring unit 120.

Application information of applications displayed on a home screen in an Android® OS and intent filter (i.e., function filter) information of the applications may be acquired as follows. An Android® launcher, which may be a function of the screen manager 34, may have a list of items (e.g., shortcut menus, widgets, folders, and the like) that may be displayed on the home screen. The list of items may include ArrayList of an ItemInfo class, and if a certain item is determined to be a shortcut menu type based on its member variable ItemInfo.itemType, an application corresponding to the item may be determined to be an application that is displayed on the home screen. The Android® launcher may compare member variables ItemInfo.itemType to each other with respect to some or all items of the ArrayList and may store the ItemInfo classes of items that satisfy predetermined criteria as a separate list, thereby acquiring a list of applications that may exist in a current home screen.

The ItemInfo class of one or more applicationsmay be converted into an Applicationlnfo class. When the ItemInfo class of one or more applications is converted into an ApplicationInfo class, intent information of the corresponding application may be acquired using a member variable ApplicationInfo.intent, and package information (e.g., a package name) of the application may be acquired from the intent information. Accordingly, an IntentFilterList of the corresponding application may be acquired from a pre-created intent filter database.

Referring again to FIG. 2, the matching unit 130 may identify one or more applications including functions that can be combined with a function of the application selected by the user by using the function information and function filter information acquired by the information acquiring unit 120. Further, the matching unit 130 may display the identified applications through the user interface 10 (see FIG. 1) so that the applications can be recognized by the user.

At this time, the matching unit 130 may identify some or all applications that may be installed in the user terminal, or applications not selected by the user among applications displayed on the home screen or menu screen. Also, the operation of identifying applications may be performed based on the correspondence relationship between functions and function filters. Since function information may include a list of a function(s) that the corresponding application can execute and function filter information may include a list of a function(s) that the application can receive and process, a function can be combined with another function associated with a function filter when the function has a matching relationship with the function filter.

As described above, matching list information may refer to a correspondence relationship between functions and function filters, for example, a matching table as shown in FIG. 3. The matching list information may be stored in the information storage unit 110. The matching unit 130 may search for one or more function filters corresponding to a function of an application selected by a user from the matching list information. The matching unit 130 may detect applications having the corresponding function filters, using the function filter information.

Information about the applications having the corresponding function filters detected by the matching unit 130 may be transferred to the screen manager 34 (see FIG. 1). The screen manager 34 may display the respective applications through the user interface 10 (see FIG. 1) so that the user can recognize or distinguish the applications from the other applications. For example, the screen manager 34 may highlight icons of the applications detected by the matching unit 130 among applications displayed on the screen, or make the icons of the applications blink so that the user can recognize or distinguish applications that can be combined with the selected application.

The matching unit 130 also may use the matching list information stored in the information storage unit 110 to acquire matching list information. The matching list information may include information about a function included in a shortcut menu for executing a new combined function, which may be created by combining a first function with a second function associated with a function filter having a corresponding relationship with the first function. The matching unit 130 may transfer the acquired matching list information, more specifically, the information about the function that may be included in a shortcut menu to the shortcut menu setting unit 140.

The shortcut menu setting unit 140 may transfer the matching list information received from the matching unit 130, for example, the information about the function included in the shortcut menu to the screen manager 34. Accordingly, when a user selects one application by selecting a corresponding application icon from among the highlighted or blinking application icons, the screen manager 34 may display information associated with a function included in the shortcut menu related to the selected application on the user interface 10. More specifically, the user may select an application icon corresponding to an application that is to be combined with another application from among applications corresponding to the highlighted or blinking application icons (i.e., the icons of the applications detected by the matching unit 130). Further, the screen manager 34 may display information about one or more functions included in the shortcut menus that can be created when the two applications are combined, on the user interface 10.

The shortcut menu setting unit 140 may perform a procedure of setting a selected shortcut menu. In more detail, the user may select a shortcut menu which he or she seeks to have displayed on the user interface 10, from among the shortcut menus displayed on the user interface 10 in association with the selected application. Further, if a single shortcut menu is displayed on the user interface 10, the operation of selecting a shortcut menu may be omitted and it can be determined that the displayed shortcut menu has been selected. After the shortcut menu is selected, the shortcut menu setting unit 140 may perform, without limitation,at least one of an operation of setting a name of the shortcut menu, an operation of setting an icon representing the shortcut menu, and an operation of setting a location of the icon, sequentially. However, aspects of the invention are not limited thereto, such that the execution order of the operations is not limited to this order.

In order to set a name of the shortcut menu, a type of the shortcut menu icon, and a location of the shortcut menu icon, the setting unit 140 may provide a candidate list for at least one of the name of the shortcut menu, the type of the shortcut menu icon, the location of the shortcut menu icon. Accordingly, the user may select an item from one or more candidate lists. The candidate lists for the name of the shortcut menu, the type of the shortcut menu icon, and the location of the shortcut menu icon may be stored in the information storage unit 110. Further, the shortcut menu setting unit 140 may allow the user to create a name of the shortcut menu, decide on a type of the shortcut menu icon, and designate a location of the shortcut menu icon. The shortcut menu setting unit 140 may display a user interface to allow the user to arbitrarily designate a location of the shortcut menu icon to a desired location. Also, by combining the two methods described above, the shortcut menu setting unit 140 may provide candidate lists, while allowing the user to create a name of the shortcut menu, decide on a type of the shortcut menu icon, and designate a location of the shortcut menu icon. In addition, the shortcut menu setting unit 140 may combine the names of the two applications to create a name of the shortcut menu, and provide a text editor to allow the user to correct the created name of the shortcut menu.

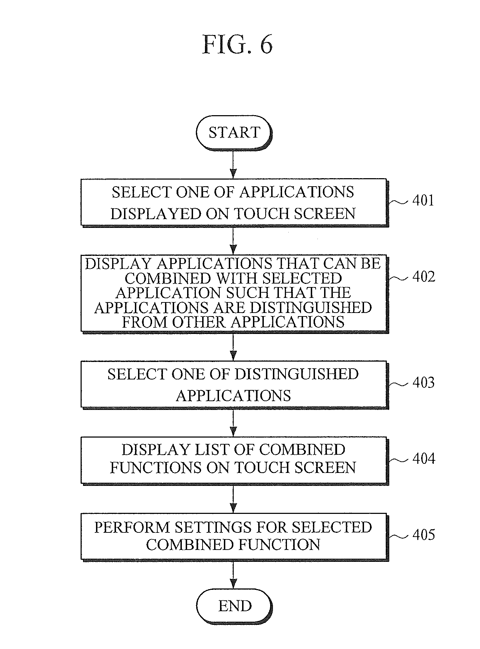

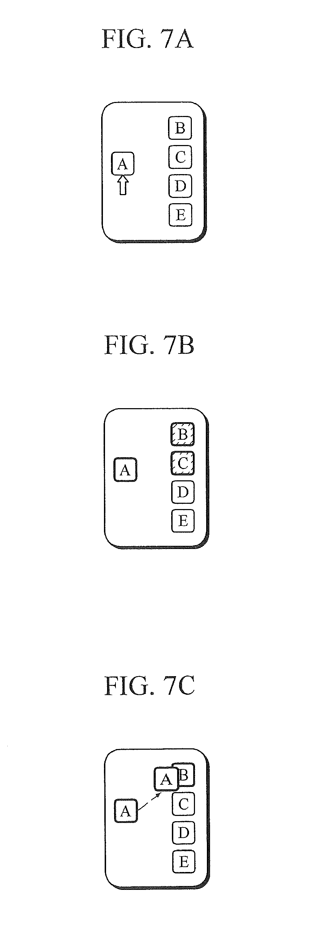

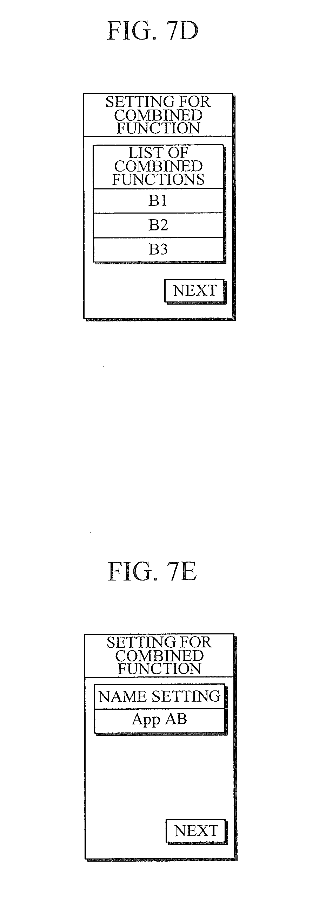

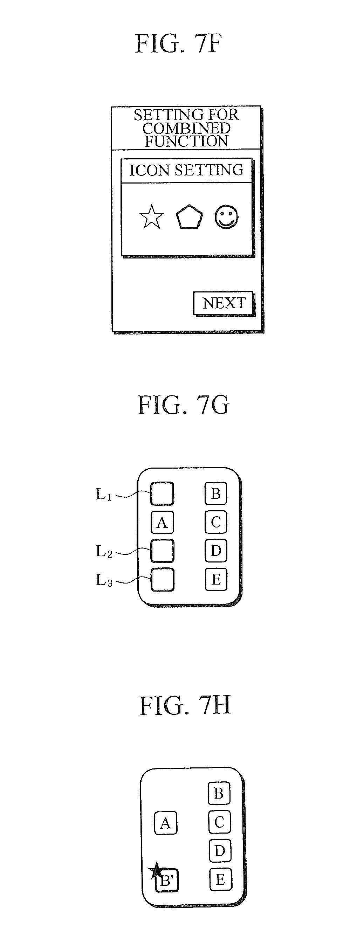

FIG. 6 is a flowchart illustrating a shortcut menu creating method according to an exemplary embodiment of the present invention. FIG. 7A, FIG. 7B, FIG. 7C, FIG. 7D, FIG. 7E, and FIG. 7F illustrate an operation of a shortcut menu creating procedure according to the shortcut menu creating method of FIG. 6 proceeds. Hereinafter, the shortcut menu creating method is described with reference to FIG. 6, FIG. 7A, FIG. 7B, FIG. 7C, FIG. 7D, FIG. 7E. FIG. 7F, FIG. 7G, and FIG. 7H. However, although the method of FIG. 6 is described as if the method is being performed by the application icons of FIG. 7, it is not limited thereto.

Referring to FIG. 6 and FIG. 7A, in operation 401, a user selects an application icon from among a plurality of application icons displayed on a touch screen or a user interface of a user terminal. A screen shown in FIG. 7A may be a home screen of the user terminal. The user may select an application by selecting an application icon, such an application icon A, having a function which may be combined with another function for generating a new combined function. The application may be selected from among five applications, including application A, application B, application C, application D, and application E displayed on the screen of FIG. 7A. For example, when the user intends to create a shortcut menu icon for executing a video call, the user may select one application icon among an icon of an application corresponding toa camera menu having a photography function, and an icon of an application corresponding to a call menu having a call function.

Referring to FIG. 6 and FIG. 7B, if the application icon A is selected in operation 401, the icons of applications that can be combined with the selected application A among the non-selected applications, such as application icon B, application icon C, application icon D, and application icon E may be displayed on the touch screen so that the user can recognize or distinguish the corresponding application icons from the other non-selected application icons. FIG. 7B shows the case where the applications corresponding to the icon B and icon C among the non-selected applications are applications that are determined to be combinable with the selected application A. More specifically, the icon B and icon C may be highlighted or blinking to be distinguished them from the icon D and icon E.

Referring to FIG. 6 and FIG. 7C, in operation 403, the user may select application B corresponding to the icon B, which may have the combinable function with the function of application A to generate the combined function, from the highlighted or blinking icon B and icon C. Referring to FIG. 7C, the user selects the application icon B by dragging the selected application icon A and dropping the application icon A onto the application icon B to combine the application A with the application B. However, aspects of the invention are not limited thereto such that the user may select the application B and the application C to be combined.

Referring to FIG. 6 and FIG. 7D, in operation 403, if the user combines the application A with the application B in operation 403, potential or candidate combined functions that can be created by combining the application A with the application B are displayed on the touch screen. The number of the candidate combined functions may be one or more. Also, the candidate combined functions may be functions belonging to sub-menus of the application A or application B. Referring to FIG. 7D, the candidate combined functions include function B1, function B2, and function B3, which may belong to sub-menus of the application B. Thereafter, the user may select one candidate function from among the candidate combined functions to decide on the combined function that may be used. However, aspects of the invention are not limited thereto, such that more than one combined functions may be selected.

Referring to FIG. 6, FIG. 7E, and FIG. 7H, in operation 405, operation of setting an attribute of the selected combined function, including at least one of a name, type, and location of a corresponding icon for executing the combined function, is performed (405). In more detail, FIG. 7E shows an example of setting a name of the selected combined function, wherein a name created by adding the two applications is displayed on a screen. The user may use the automatically generated name as it is or provide a different name to be stored. Also, FIG. 7F shows an example of setting an icon of the selected combined function, in which a list of icons that can be used to represent the combined function is displayed on a touch screen. A user may select an icon of choice from among the displayed icons or use a different image that may be stored in a memory as an icon. Also, FIG. 7G shows location L1, location L2, and location L3 at which icons representing combined functions can be arranged on a touch screen. A user may select one from among the location L1, the location L2, and the location L3 to decide a location at which a newly created icon will be positioned. FIG. 7H shows a situation where the user selects the location L3 among the location L1, the location L2, and the location L3 so that an icon corresponding to a combined function is disposed at the location L3.

According to exemplary embodiments of the present invention, a user may be able to create a shortcut menu icon through which the user may connect to a sub-menu of an application on a home screen or a menu screen of the user's terminal. As a result, a terminal including a shortcut menu creating apparatus may more easily connect to a sub-menu of a specific application.

Although exemplary embodiments of the present invention were disclosed with respect to using an application icon to combine a function of a first application with a function of a second application, aspects of the invention are not limited thereto. For example, functions of respective applications may be combined using a command prompt, by an administrator, through a menu operation and the like.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A method for generating a combined function includes selecting a first application including a first function, determining whether a second application includes a second function compatible to be combined with the first function, and combining the first function and the second function to generate the combined function. A terminal includes a user interface to receive a selection of a first application including a first function, an information acquiring unit to determine whether a second application includes a second function compatible to be combined with the first function, and a shortcut menu creating apparatus to combine the first function and the second function to generate a combined function.

## Claims

1. A method for generating a combined function, comprising:
selecting a first application comprising a first function;
determining whether a second application comprises a second function compatible to be combined with the first function; and
combining the first function and the second function to generate the combined function.

2. The method of claim 1,
wherein the determining comprises determining compatibility of the second function based on function information of the first application; or/and
wherein the determining comprises determining compatibility of the second function based on function filter information of the second application.

3. The method of claim 1 or 2, further comprising:
displaying a first icon corresponding to the first application; and
displaying a second icon corresponding to the second application; and preferably further comprising:
displaying a third icon corresponding to the combined function.

4. The method of claim 3, wherein the first application is selected by selecting the first icon, and the second icon is displayed to be distinguishable from other icons displayed on a display screen when the second application is determined to comprise a second function compatible to be combined with the first function.

5. The method of one of claims 1 to 4, further comprising classifying the applications as a preloaded application or a downloaded application.

6. The method of claim 5, wherein the function information is stored in a first database if the application is determined to be a preloaded application, and stored in a second database if the application is determined to be a downloaded application;
or/and
wherein the function filter information is stored in a first database if the application is determined to be a preloaded application, and stored in a second database if the application is determined to be a downloaded application.

7. The method of one of claims 1 to 6, wherein the determination of whether the second application comprises the second function compatible to be combined with the first function is made with reference to a matching table comprising a relationship between function information of the first application and function filter information of the second application.

8. A terminal, comprising:
a user interface to receive a selection of a first application comprising a first function;
an information acquiring unit to determine whether a second application comprises a second function compatible to be combined with the first function; and
a shortcut menu creating apparatus to combine the first function and the second function to generate a combined function.

9. The terminal of claim 8,
wherein the information acquiring unit is adapted to determine compatibility of the second function based on function information of the first application;
or/and
wherein the information acquiring unit is adapted to determine compatibility of the second function based on function filter information of the second application.

10. The terminal of claim 8 or 9, wherein the user interface displays a first icon corresponding to the first application, and a second icon corresponding to the second application;
and wherein the user interface preferably displays a third icon corresponding to the combined function.

11. The terminal of claim 10 wherein the user interface receives the selection of the first icon to select the first application, and displays the second icon to be distinguishable from other icons displayed on the user interface when the second application is determined to comprise a second function compatible to be combined with the first function.

12. The terminal of one of claims 8 to 11, wherein the information acquiring unit classifies the applications as a preloaded application or a downloaded application.

13. The terminal of claim 12, further comprising an information storage unit comprising a first database and a second database,
wherein the function information is stored in the first database if the application is determined to be a preloaded application, and stored in the second database if the application is determined to be a downloaded application.

14. The terminal of claim 12 or 13, further comprising an information storage unit comprising a first database and a second database, wherein the function filter information is stored in the first database if the application is determined to be a preloaded application, and stored in the second database if the application is determined to be a downloaded application.

15. A method for generating a combined function, preferably according to one of claims 1 to 7, comprising:
selecting a first icon corresponding to a first application displayed on a touch screen;
displaying applications that are capable of combining with the first application to be distinguishable from the other applications displayed on the touch screen;
selecting a second icon corresponding to a second application among the applications that are capable of combining with the first application;
generating the combined function by combining a function of the first application and a function of the second application; and
displaying a third icon corresponding to the combined function in a shortcut menu.
